# EUROPEAN PATENT APPLICATION

(11) **EP 4 734 223 A1**
(43) Date of publication of application: **29.04.2026**
(21) Application number: 24865801.5
(22) Date of filing: 10.09.2024
(51) Int. Cl.: H01M 10/48, H01M 10/6555, H01M 10/658

(54) **BATTERY MODULE, BATTERY PACK, AND ENERGY STORAGE SYSTEM**

(30) Priority: 11.09.2023 KR 20230120508; 06.09.2024 KR 20240121685
(71) Applicant: LG Energy Solution, Ltd., Seoul 07335 (KR)
(72) Inventor: NA, Jongseung, Daejeon 34122 (KR); CHA, Hun, Daejeon 34122 (KR)
(74) Representative: Hoffmann Eitle
(86) International application number: PCT/KR2024/013669
(87) International publication number: WO 2025/058362

(57) **Abstract**

A battery module according to an embodiment of the present invention comprises: a battery cell stack in which a plurality of battery cells are stacked in one direction; and a temperature sensing unit disposed in the battery cell stack, wherein the temperature sensing unit comprises: a thermally conductive member having at least a portion in contact with the battery cells; and a temperature sensor coupled to the thermally conductive member to measure the temperature of the battery cells.

## Description

### [TECHNICAL FIELD]

### Cross-Reference to Related Application(s)

This application claims priority to and the benefit of Korean Patent Application No. 10-2023-0120508, filed on September 11, 2023, and Korean Patent Application No. 10-2024-0121685, filed on September 6, 2024, with the Korean Intellectual Property Office, the disclosures of which are incorporated herein by reference in their entirety.

The present disclosure relates to a battery module, a battery pack and an energy storage system, and more particularly, to a battery module, a battery pack and an energy storage system, which enable accurate temperature measurement of battery cells.

### [BACKGROUND]

The use of mobile devices such as cell phones, laptops, camcorders and digital cameras, and energy storage systems (ESS) has been routinized in modern society, which accelerates the development of technologies in the fields related to the mobile devices. Further, as a measure to solve the atmospheric pollution caused from existing gasoline vehicles that uses fossil fuels, rechargeable secondary batteries are being used as power sources for electric vehicles (EV), hybrid electric vehicles (HEV), plug-in hybrid electric vehicles(P-HEV) and so on. Thus, the necessity to develop the secondary batteries is increasing.

Presently, commercially available batteries include nickel-cadmium batteries, nickel-hydrogen batteries, nickel-zinc batteries, and lithium batteries. Of these batteries, lithium secondary batteries are emerging as the most popular, as they do not suffer from the memory effect, and therefore, are freely rechargeable, have low self-discharge rates, and have high energy density, as compared to nickel-based batteries.

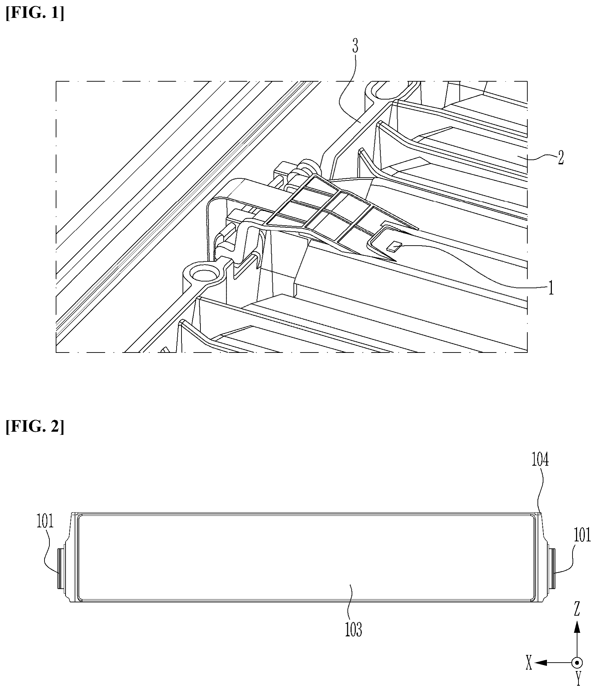

FIG. 1 is a diagram showing a temperature sensor 1 provided in a conventional battery module or battery pack. In the conventional battery module or battery pack, a battery cell stack 2 is housed in a housing 3, and a temperature sensor 1 is disposed on one surface (e.g., the upper surface) of the battery cell stack 2 to detect the temperature of battery cells.

When the temperature sensor 1 is disposed on one surface of the battery cell stack 2, the separation distance between the temperature sensor 1 and the battery cells of the battery cell stack 2 is large. Therefore, the temperature of the battery cell measured by the temperature sensor 1 differs slightly from the actual temperature of the battery cells.

Meanwhile, in order to accurately measure the temperature of the battery cells, it is preferable to measure the temperature of the main body of the battery cells. However, the battery cells may cause a phenomenon in which the battery cells swell due to decomposition of the internal electrolyte and generation of gas in the process of repeating charge/discharge or in the initial charging process, i.e., swelling or bleeding phenomena. In a battery module that includes a large number of the battery cells, when swelling occurs in the battery cells, the battery cells swell in the direction of their thickness, which makes it difficult to locate a temperature sensor in the main body of the battery cells.

Therefore, there is a need to develop a method which allows the temperature sensor to accurately measure the temperature of the battery cell, taking into consideration the swelling phenomenon of the battery cells, etc.

### [DETAILED DESCRIPTION OF THE INVENTION]

### [Technical Problem]

It is an object of the present disclosure to provide a battery module, a battery pack and an energy storage system, which enable accurate temperature measurement of battery cells.

However, the technical objects to be solved by the embodiments of the present disclosure are not limited to those disclosed above, and may be expanded in various ways within the scope of the technical idea included in the present disclosure.

### [Technical Solution]

According to an embodiment of the present disclosure, there is provided a battery module comprising: a battery cell stack in which a plurality of battery cells are stacked along one direction; and a temperature sensing unit disposed in the battery cell stack, wherein the temperature sensing unit comprises: a thermally conductive member configured to be at least partially in contact with the battery cells; and a temperature sensor coupled to the thermally conductive member to measure the temperature of the battery cells.

The thermally conductive member may comprise a contact portion that is in contact with a cell body of the battery cell and a mounting portion on which the temperature sensor is disposed.

The mounting portion may be folded and extended from one end of the contact portion and located outside the battery cell stack.

The contact portion may comprise a first portion that is in contact with the cell body and a second portion that extends from the first portion to protrude outside the battery cell.

The thermally conductive member further comprises an expansion portion that is connected to the first portion, and is in contact with the cell body, and the area of the expansion portion may be larger than the area of the first portion.

The area of the expansion portion may be 0.1 times to 1 time the area of the cell body.

The thermally conductive member may further comprise: an extension portion that extends from the first portion in a direction toward the lower portion of the battery cell, and a hooking portion that is folded from a terminal end of the extension portion toward the one direction in which the plurality of battery cells are stacked.

The contact portion is arranged to be parallel to the large area of the battery cell, and the mounting portion may extend along the one direction so as to orthogonally cross with the contact portion.

The contact portion comprises a pair of contact portions arranged to face each other, and the mounting portion may be disposed between the pair of contact portions to connect the respective contact portions.

The contact portion may be formed in the shape of thin films or wires.

The battery module may further comprise a reinforcing member that supports at least a part of the temperature sensing unit.

The thermally conductive member may be disposed at least at one place between two battery cells that are located closest to the center of the battery cell stack among the plurality of battery cells, and between the two battery cells that are located at the outermost side among the plurality of battery cells.

The battery module further comprises a compression pad located at least at one place between two adjacent battery cells and the outside of the outermost battery cell among the plurality of battery cells, wherein the thermally conductive member may be disposed on the compression pad.

The compression pad may comprise a housing groove in which at least a part of the thermally conductive member is housed.

The thermally conductive member comprises a contact portion that is in contact with the cell body of the battery cells and a mounting portion on which the temperature sensor is disposed, at least a part of the contact portion is housed in the housing groove, and the mounting portion may be folded and extended from one end of the contact portion and located outside the battery cell stack.

The at least a part of the thermally conductive member may be housed in the housing groove so as to wholly flatten with a large area of the compression pad.

The thermally conductive member may further comprise a heat insulating member that covers a portion of the battery cell that is not in contact with a cell body of the battery cell.

The heat insulating member comprises a sensor housing portion in which a portion of the thermally conductive member is exposed to the outside, and the temperature sensor may be disposed in the sensor housing portion.

There may be provided a battery pack comprising the battery module according to the embodiments.

There may be provided an energy storage system comprising the battery pack according to the embodiments.

### [Advantageous Effects]

According to an embodiment of the present disclosure, a battery module, a battery pack and an energy storage system can measure the surface temperature of the battery cells, so that the temperature of the battery cells can be accurately measured. In addition, deformation of the battery cells due to the thermally conductive member disposed between adjacent battery cells can be minimized.

The effects of the present disclosure are not limited to those described above, and other effects that are not described herein may clearly be understood by one of ordinary skill in the art from the appended claims.

### [BRIEF DESCRIPTION OF THE DRAWING]

FIG. 1 shows a temperature sensor according to the prior art.
FIG. 2 is a perspective view of a battery cell stack according to an embodiment of the present disclosure.
FIG. 3 is a perspective view showing a structure in which a temperature sensing unit according to an embodiment of the present disclosure is disposed in a battery cell stack.
FIG. 4 is an exploded perspective view of FIG. 3.
FIG. 5 is a perspective view of a temperature sensing unit according to an embodiment of the present disclosure.
FIG. 6 is a perspective view showing a modified example of a temperature sensing unit according to an embodiment of the present disclosure.
FIG. 7 is a perspective view showing another modified example of a temperature sensing unit according to an embodiment of the present disclosure.
FIG. 8 is a perspective view showing yet another modified example of a temperature sensing unit according to an embodiment of the present disclosure.
FIG. 9 is a perspective view showing yet another modified example of a temperature sensing unit according to an embodiment of the present disclosure.
FIG. 10 is a perspective view showing an example of a reinforcing member for supporting a temperature sensing unit according to an embodiment of the present disclosure.
FIG. 11 is a perspective view showing an example in which a battery cell stack according to one embodiment of the present disclosure is housed in a case.
FIG. 12 is an exploded perspective view of FIG. 11.
FIG. 13 is a cross-sectional view of a battery module according to another embodiment of the present disclosure.
FIG. 14 is a perspective view showing a structure in which a temperature sensing unit according to another embodiment of the present disclosure is disposed in a battery cell stack.
FIG. 15 is an exploded perspective view of FIG. 14.
FIG. 16 is an exploded perspective view for explaining the compression pad and thermally conductive member shown in FIG. 14.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is arranged "on" a specific part, the description includes not only a case where the layer, film, region, plate or the like is arranged "directly on" the specific part, but also a case where the layer, film, region, plate or the like is arranged on the specific part via another part. When a part is arranged "directly on" another part, this indicates that no new component is present between the two parts. Further, when a component is arranged "on" a reference part, this indicates that the component is present at the top of or under the reference part, and does not necessarily indicate that the component is arranged only at the top of the reference part, which is opposite to the direction of gravity.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

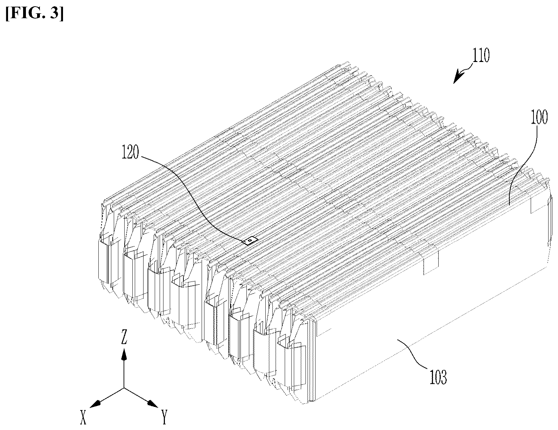

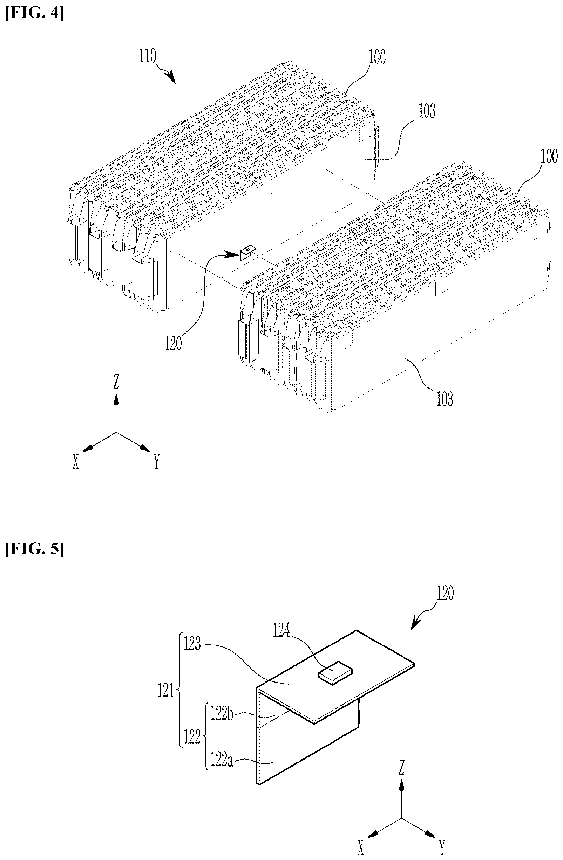

FIG. 2 is a perspective view of a battery cell stack according to an embodiment of the present disclosure. FIG. 3 is a perspective view showing a structure in which a temperature sensing unit according to an embodiment of the present disclosure is disposed in a battery cell stack. FIG. 4 is an exploded perspective view of FIG. 3. FIG. 5 is a perspective view of a temperature sensing unit according to an embodiment of the present disclosure.

Referring to FIGS. 2 to 5, the battery module 10 according to the present embodiment includes a battery cell stack 110 in which a plurality of battery cells 100 are stacked, and a temperature sensing unit 120 disposed in the battery cell stack 110. Meanwhile, a detailed description of the temperature sensing unit 120 will be given below.

First, the battery cell 100 according to an embodiment of the present disclosure may be a pouch-type battery in which an electrode assembly having electrode leads 101 protruding in one or both directions is housed in a pouch case 104. However, this is only one example, and the battery cell according to another embodiment of the present disclosure may be a prismatic battery. For convenience of explanation, the battery cell 100, which is a pouch-type battery, will be mainly described below.

The battery cell 100 may have a rectangular sheet shape. The battery cell 100 may be formed by housing an electrode assembly in a pouch case 104 made of a laminate sheet including a resin layer and a metal layer, and then bonding the outer peripheral sides of the pouch case 104. As an example, the battery cell 100 may have a structure in which two electrode leads 101 face each other and protrude from both ends of the cell body 103. As another example, a structure in which all of the electrode leads 101 of the battery cell 100 protrude in one direction is also possible. One of the electrode leads 101 is a positive electrode lead, and the other is a negative electrode lead.

The battery cell 100 can be produced by bonding the peripheral portion of a pouch case 104 in a state in which an electrode assembly (not shown) is housed in a pouch case 104. As another example, the battery cell 100 is configured such that in a state where one side of the pouch case 104 is folded, the electrode assembly may be housed and the remaining sides may be sealed.

The pouch case 104 made of the laminate sheet may include an inner resin layer for sealing, a metal layer for preventing penetration of materials, and an outer side resin layer located on the outermost side. Based on the electrode assembly inside the pouch case 104, the inner side resin layer may be located on the innermost side, the outer side resin layer may be located on the outermost side, and the metal layer may be located between the inner side resin layer and the outer side resin layer.

The outer side resin layer has excellent tensile strength and weather resistance relative to the thickness and can have electrical insulation properties in order to protect the electrode assembly from the outside. Such an outer side resin layer may include a polyethylene terephthalate (PET) resin or a nylon resin. The metal layer can prevent air, moisture, and the like from flowing into the pouch-type secondary battery. This metal layer may include aluminum (Al). The inner side resin layers may be heat-sealed to each other by heat and/or pressure applied in a state in which the electrode assembly is embedded. This inner side resin layer may include casted polypropylene (CPP) or polypropylene (PP).

The pouch case 104 is divided into two portions, and a concave-shaped housing part in which the electrode assembly can be seated may be formed in at least one of the two portions. Along the outer circumference of this housing portion, the inner side resin layers of the two portions of the pouch case 104 may be joined to each other, so that the pouch case 104 is sealed, and the battery cell 100, which is a pouch-type secondary battery, can be produced.

The battery cells 100 may be configured in a plurality of numbers, and the plurality of battery cells 100 may be stacked so as to be electrically connected to each other, thereby forming a battery cell stack 110. In particular, as shown in FIG. 3, a plurality of battery cells 100 may be stacked along one direction d1 parallel to the y-axis while standing upright to make one side surfaces of the cell body 103 face each other. As a result, the electrode leads 101 may protrude in a direction perpendicular to the direction in which the battery cells 100 are stacked. That is, in the battery cell 100, one electrode lead 101 may protrude toward the x-axis direction, and the other electrode lead 101 may protrude toward the -x-axis direction. In the case of a battery cell in which the electrode leads 101 protrudes in only one direction, the electrode leads 101 protrude in the x-axis direction or the -x-axis direction.

The temperature sensing unit 120 includes a thermally conductive member 121 disposed so as to be at least partially in contact with the battery cell 100, and a temperature sensor 124 coupled to the thermally conductive member 121 to measure the temperature of the battery cell 100.

The thermally conductive member 121 may be formed from a material having high thermal conductivity so that heat generated from the battery cell 100 can be rapidly conducted to the temperature sensor 124. The thermally conductive member 121 may be formed from various materials having thermal conductivity, and the present disclosure is not limited or restricted by the material and characteristics of the thermally conductive member 121. For example, the thermally conductive member 121 may be formed from a metal material having high thermal conductivity. In addition, the thermally conductive member 121 may be provided in a form of a thin film of thermally conductive resin.

The thermally conductive member 121 may include a contact portion 122 that is in contact with the cell body 103 of the battery cell 100 and a mounting portion 123 on which the temperature sensor 124 is disposed.

The contact portion 122 is a portion that is at least partially in contact with the cell body 103 of the battery cell 100. Heat generated in the battery cell 100 may be transferred to the temperature sensor 124 through the contact portion 122. In order to increase the area where the contact portion 122 is in contact with the battery cell 100, the contact portion 122 can be arranged to be parallel to a large area of the battery cell 100, and may be formed in the shape of flat thin films as a whole. In addition, even if the contact portion 122 is arranged between the battery cells 100, the contact portion 122 is formed in the shape of thin films, so that pressing and/or deformation of the battery cell 100 by the contact portion 122 can be minimized. Therefore, even if a swelling phenomenon occurs on the battery module 10, damage to the battery cell 100 by the contact portion 122 can be prevented.

The contact portion 122 may include a first portion 122a that is in contact with the cell body 103 and a second portion 122b that extends from the first portion 122a to protrude outward the battery cell 100. That is, the second portion 122b means a portion that is not in contact with the battery cell 100. Although not shown in FIGS. 3 to 5, the temperature sensor 124 may be disposed in the second portion 122b of the contact portion 122.

Meanwhile, the contact portion 122 described above with reference to FIGS. 3 to 5 has been described in the shape of thin films, but is not limited thereto. For example, the contact portion 122 may be formed in the shape of wires, and the wire-shaped contact portion 122 may be in contact with the cell body 103 of the battery cell 100. In order to increase the area where the contact portion 122 is in contact with the battery cell 100, the contact portion 122 may be formed in the shape of a plurality of wires.

The mounting portion 123 may be folded and extended from one end of the contact portion 122 and located outside the battery cell stack 110. For example, the mounting portion 123 may be folded and extended from the second portion 122b, which is the portion where the contact portion 122 is not in contact with the battery cell 100. For example, the mounting portion 123 may be extended along one direction d1 in which the battery cells 100 are stacked so as to orthogonally cross with the contact portion 122. For this reason, the temperature sensor 124 may be easily seated on the mounting portion 123. In addition, since the mounting portion 123 may be supported by a part of the battery cell 100, the temperature sensor 124 can be stably maintained after being coupled to the mounting portion 123.

An adhesive (not shown) for fixing the mounting portion 123 to the battery cell 100 can be applied to an empty space between the mounting portion 123 and the battery cell 100. After applying the adhesive to the outer surface of the battery cell 100, the mounting portion 123 is disposed so that the mounting portion 123 can be fixed to the battery cell 100. Therefore, even if an external impact occurs, the mounting portion 123 is fixed to the battery cell 100, so that the impact on the temperature sensor 124 fixed to the mounting portion 123 can be reduced.

The temperature sensor 124 may be, for example, configured as a thermistor that can calculate the temperature by the resistance value, etc. from the received heat. Of course, it is also possible to configure it using a different type of temperature sensor.

The temperature information detected by the temperature sensor 124 is transmitted to the battery management system (BMS) in the form of an electrical signal. Therefore, the processor of the BMS can control the charging and discharging of the battery cell in advance to prevent thermal runaway of the battery cell, etc. when overheating of the battery cell, etc. is detected.

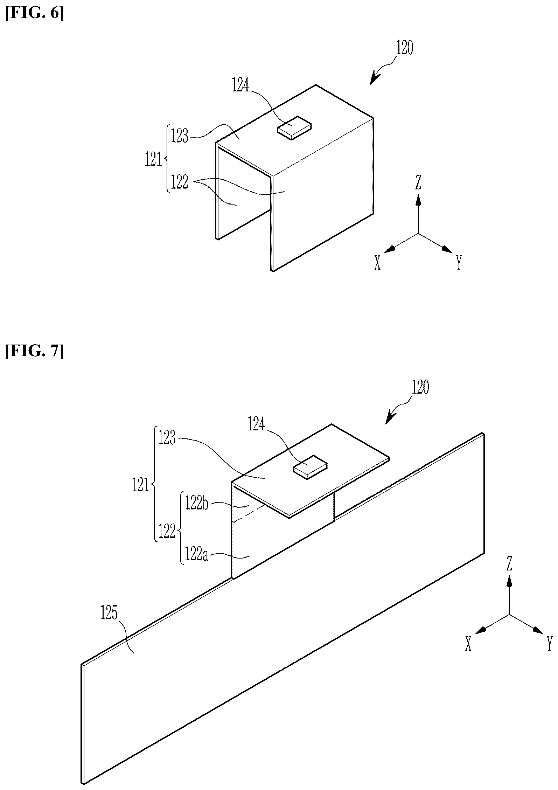

FIG. 6 is a perspective view showing a modified example of a temperature sensing unit according to an embodiment of the present disclosure.

Referring to FIG. 6, the thermally conductive member 121 may include a pair of contact portions 122 that is in contact with the cell body 103 of the battery cell 100 and a mounting portion 123 on which the temperature sensor 124 is disposed. A pair of contact portions 122 can be arranged to face each other, and a mounting portion 123 can be disposed between a pair of contact portion 122 to connect respective contact portions 122. For example, the thermally conductive member 121 can be formed in a 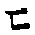 -shape.

As shown in FIG. 6, the mounting portion 123 is supported by a pair of contact portions 122 facing each other, so that the structural stability increases when the temperature sensing unit 120 is disposed on the battery cell stack 110. In addition, the area where the thermally conductive member 121 is in contact with the cell body 103 of the battery cell 100 increases, so that the accuracy of temperature measurement of the battery cell 100 can be improved.

FIG. 7 is a perspective view showing another modified example of a temperature sensing unit according to an embodiment of the present disclosure.

Referring to FIG. 7, the thermally conductive member 121 may further include an expansion portion 125 that is connected to the first portion 122a of the contact portion 122, and is in contact with the cell body 103.

The expansion portion 125 is a portion for increasing the area in which the thermally conductive member 121 is in contact with the cell body 103 of the battery cell 100. Since the area in which the thermally conductive member 121 is in contact with the cell body 103 increases through the expansion portion 125, the accuracy of temperature measurement of the battery cell 100 may be improved.

Further, since the area in which the thermally conductive member 121 is in contact with the cell body 103 increases by the area of the expansion portion 125, the frictional force between the thermally conductive member 121 and the battery cell 100 may increase. Thereby, when the temperature sensing unit 120 is disposed on the battery cell stack 110, the structural stability can be increased. For example, even when the battery module 10 receives an impact from the outside, the frictional force between the thermally conductive member 121 and the battery cell 100 increases, so that the temperature sensing unit 120 can be prevented from being detached from the battery cell stack 110.

In this case, the area of the expansion portion 125 can be wider than the area of the first portion 122a. For example, the area of the expansion portion 125 may be almost the same as the area of the cell body 103. In this case, since the area where the thermally conductive member 121 is in contact with the cell body 103 is the largest, the accuracy of temperature measurement of the battery cell 100 increases, and the frictional force between the thermally conductive member 121 and the battery cell 100 can be maximized.

As another example, the area of the expansion portion 125 may be 0.1 times to 1 time the area of the cell body 103. Preferably, the area of the expansion portion 125 may be 0.2 to 0.5 times the area of the cell body 103. Since the area where the thermally conductive member 121 is in contact with the cell body 103 increases within the above-mentioned area range, the expansion portion 125 can be tightly attached between the adjacent battery cells 100 due to pressure and friction caused by the battery cells 100 when assembling the battery cell stack 110. Therefore, the accuracy of temperature measurement of the battery cell 100 can be improved, and the temperature sensing unit 120 may be prevented from being detached from the battery cell stack 110 by a frictional force between the thermally conductive member 121 and the battery cell 100.

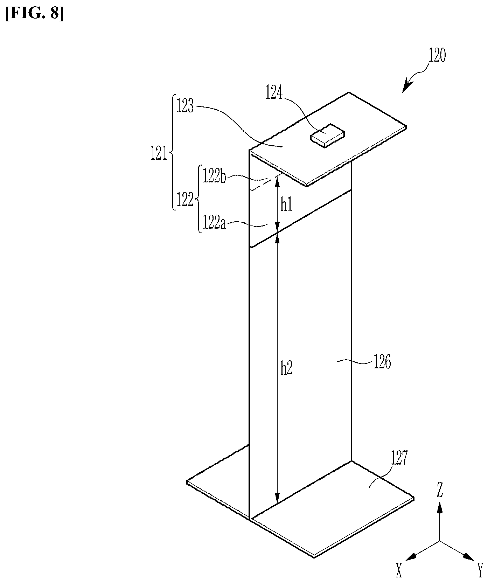

FIG. 8 is a perspective view showing yet another modified example of a temperature sensing unit according to an embodiment of the present disclosure.

Referring to FIG. 8, the thermally conductive member 121 may further include an extension portion 126 that extends from the first portion 122a in a direction toward the lower portion of the battery cell 100, and a hooking portion 127 that is folded from a terminal end of the extension portion toward the one direction d1 in which the plurality of battery cells 100 are stacked.

The extension portion 126 may extend in the -z-axis direction toward the lower portion of the cell body 103.

At this time, the sum of the vertical length h1 of the contact portion 122 of the thermally conductive member 121 and the vertical length h2 of the extension portion 126 may be equal to or slightly longer than the vertical length of the battery cell 100. As a result, the extension portion 126 penetrates between two adjacent battery cells 100 of the battery cell stack 110 in the vertical direction (z-axis direction), and the hooking portion 127 is folded at a terminal end of the extension portion 126, so that the hooking portion 127 is hooked onto a lower portion of the battery cell stack 110. Therefore, the structural stability of the temperature sensing unit 120 increases due to the hooking structure of the extension portion 126 and the hooking portion 127. For example, even when the battery module 10 receives an impact from the outside, the hooking portion 127 of the thermally conductive member 121 is hooked onto the lower portion of the battery cell stack 110, so that the temperature sensing unit 120 can be prevented from being detached from the battery cell stack 110.

In addition, since the area where the thermally conductive member 121 is in contact with the battery cell 100 increases even through the extension portion 126, the accuracy of temperature measurement of the battery cell 100 can be improved.

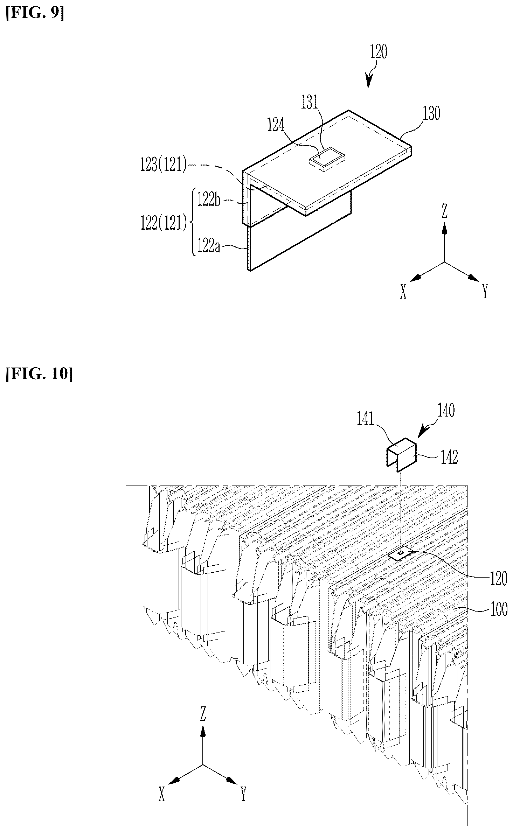

FIG. 9 is a perspective view showing yet another modified example of a temperature sensing unit according to an embodiment of the present disclosure.

Referring to FIG. 9, the battery module 10 may further include a heat insulating member 130 that covers at least a part of the thermally conductive member 121. For example, the heat insulating member 130 may cover a portion of the thermally conductive member 121 that is not in contact with the cell body 103 of the battery cell 100. For example, the heat insulating member 130 may cover the second portion 122b of the contact portion 122 and the mounting portion 123. Since the heat insulating member 130 does not cover the first portion 122a which is a portion in contact with the cell body 103 of the battery cell 100 in the contact portion 122 of the thermally conductive member 121, so that the first portion 122a of the contact portion 122 can be in direct contact with the cell body 103 of the battery cell 100. Therefore, heat generated in the battery cell 100 can be transferred to the temperature sensor 124 through the first portion 122a of the contact portion 122.

Since the heat insulating member 130 covers the second portion 122b of the contact portion 122 of the thermally conductive member 121 and the mounting portion 123, the heat transferred from the first portion 122a of the contact portion 122 toward the temperature sensor 124 can be prevented from being discharged outside the thermally conductive member 121. Further, the heat insulating member 130 can also prevent the temperature sensor 124 from being affected by the environment outside the battery cell 100. Therefore, the temperature of the cell body 103 of the battery cell 100 can be measured more accurately by the temperature sensor 124.

The heat insulating member 130 can be made from a material such as silicon oxide, for example, glass fiber. However, the material of the heat insulating member 130 is not limited thereto, and any material with high heat insulating properties may be included in the present embodiment. As another example, the heat insulating member 130 may be made from a material such as urethane series (including urethane foam), polyurethane series (including polyurethane foam), polystyrene (including expanded polystyrene or Styrofoam), polyethylene, cellulose, phenol resin (including phenol foam), etc.

The heat insulating member 130 includes a sensor housing portion 131 in which a part of the thermally conductive member 121 (e.g., a part of the mounting portion 123) is exposed to the outside, and the temperature sensor 124 may be disposed in the sensor housing portion 131. The sensor housing portion 131 minimizes the area where the surface of the thermally conductive member 121 is exposed to the outside, and can be formed in a shape corresponding to the shape of the temperature sensor 124 so that the temperature sensor 124 can be disposed. The temperature sensor 124 is fixed on the mounting portion 123 of the thermally conductive member 121 while being housed in the sensor housing portion 131, whereby even if an external force generated by an external impact, etc., is applied to the temperature sensor 124, the temperature sensor 124 can be prevented from being detached from the mounting portion 123. Furthermore, since the external force acting on the temperature sensor 124 is dispersed through the heat insulating member 130, the failure of the temperature sensor 124 can be reduced.

FIG. 10 is a perspective view showing an example of a reinforcing member for supporting a temperature sensing unit according to an embodiment of the present disclosure.

Referring to FIG. 10, the battery module 10 may include a reinforcing member 140 that supports at least a part of the temperature sensing unit 120. The reinforcing member 140 may be maintained on the battery cell 100 in a state being in contact with at least a part of the temperature sensing unit 120. For example, as shown in FIG. 10, the reinforcing member 140 may be a " 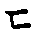 " shaped member that may cover the temperature sensing unit 120 on the upper portion of the battery cell 100. Specifically, the reinforcing member 140 may include a first surface 141 that is parallel to the upper surface (x-y plane in the figure) of the battery cell stack 110, and a second surface 142 that extends from both ends of the first surface 141 to be parallel to the large area of the battery cell 100. Therefore, the first surface 141 of the reinforcing member 140 can support the mounting portion 123 of the temperature sensing unit 120, and the second surface 142 can support the contact portion 122 of the temperature sensing unit 120. However, the shape of the reinforcing member 140 is not limited by those described above, and may have various shapes. For example, the second surface 142 of the reinforcing member 140 may be a " 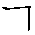 "-shaped member extending from one end of the first surface 141.

Meanwhile, although not shown in FIG. 10, a sensor housing groove (not shown) in which a temperature sensor 124 can be housed may be formed on the surface of the first surface 141 of the reinforcing member 140 facing the temperature sensing unit 120. Therefore, even when the reinforcing member 140 covers the temperature sensing unit 120, the temperature sensor 124 can be prevented from being pressed by the reinforcing member 140.

The reinforcing member 140 can be fabricated from a material that can be elastically deformed so as to be held by the battery cell 100. The reinforcing member 140 can elastically press the battery cell 100 while covering the temperature sensing unit 120, thereby supporting the temperature sensing unit 120. However, the method by which the reinforcing member 140 is held by the battery cell 100 is not limited by those described above. For example, the reinforcing member 140 can be fixed to the battery cell 100 by an adhesive without pressing the battery cell 100 while covering the temperature sensing unit 120.

Further, the reinforcing member 140 is not limited to the form shown in FIG. 10, and may have various forms capable of supporting at least a part of the temperature sensing unit 120. For example, the battery module 10 may include a reinforcing member (not shown) in the form of a bridge extending from the busbar frame 200 toward at least one of the battery cells 100. The bridge member extending from the busbar frame 200 may support at least a part of the temperature sensing unit 120. Specifically, the bridge member may extend from the busbar frame 200 and fix the upper surface of the temperature sensing unit 120, i.e., the mounting portion 123. As another example, the bridge member may also fix the side surface of the temperature sensing unit 120, i.e., the contact portion 122, while being spaced apart from the mounting portion 123 of the temperature sensing unit 120 by a predetermined distance.

The reinforcing member 140 may be fabricated from a material that has rigidity and can be elastically deformed as necessary. For example, the reinforcing member 140 may be made from a plastic material. However, the material of the reinforcing member 140 is not limited by those described above.

The reinforcing member 140 supports at least a part of the temperature sensing unit 120, and thus can reinforce the thermally conductive member 121 when its rigidity is insufficient. In addition, since the reinforcing member 140 can cover at least a part of the temperature sensing unit 120, it can protect the temperature sensing unit 120 and prevent the temperature sensing unit 120 from being detached from the battery cell stack 110.

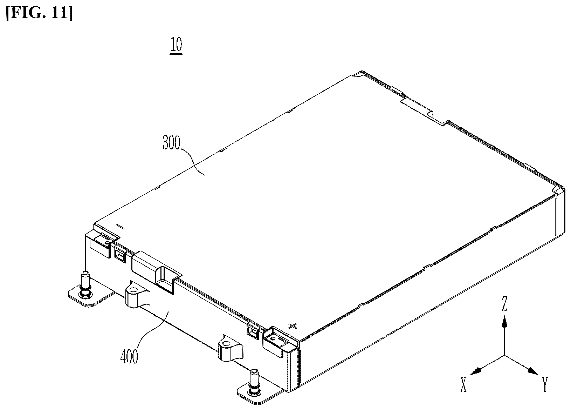

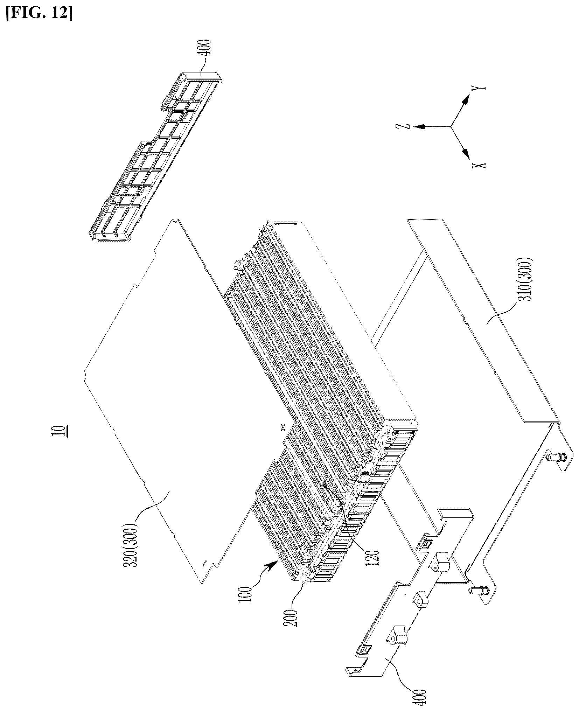

FIG. 11 is a perspective view showing an example in which a battery cell stack according to one embodiment of the present disclosure is housed in a case. FIG. 12 is an exploded perspective view of FIG. 11.

Referring to FIGS. 11 and 12, the battery module 10 may include a busbar frame 200 that covers one side of the battery cell stack 110. The electrode leads 101 protruding from the plurality of battery cells 100 may be connected to the busbar 210 included in the busbar frame 200. The busbar 210 electrically connects the battery cells 100 inside the battery module 10. The busbar 210 preferably includes a metal material so that electrical connection is possible.

Further, the battery module 10 may include a module frame 300 and end plates 400 that form an internal space in which the battery cell stack 110 is housed. The module frame 300 may be a structure in which one surface and the other surface opposite to the one side are open. More specifically, based on the battery cell stack 110, the module frame 300 can be opened in both directions in which the electrode leads 101 protrude.

The module frame 300 according to an embodiment of the present disclosure can include a U-shaped frame 310 that covers the lower surface and both side surfaces of the battery cell stack 110, and an upper cover 320 that covers the open upper surface of the U-shaped frame 310. The U-shaped frame 310 and the upper cover 320 can be mutually joined to each other between corresponding edges.

In addition, in another embodiment of the present disclosure, the module frame can be a mono-frame type in which the upper surface, the lower surface, and both side surfaces are integrated.

The end plates 400 may be configured in a plurality of numbers, and may cover both open sides of the module frame 300. The battery cell stack 110 is housed in the internal space formed by the module frame 300 and the end plate 400, and thus the battery cell stack 110 can be physically protected. For this purpose, the module frame 300 and the end plate 400 may include a metal material having a predetermined strength. Meanwhile, the module frame 300 and the end plate 400 may be joined by welding while their corresponding corner portions are in contact with each other.

Meanwhile, although the battery cell stack 110 has been described as being housed in the module frame 300 and the end plate 400 to form the battery module 10, this is not intended to be limiting. For example, the battery cell stack 110 may be housed in a pack case (not shown) to form a battery pack.

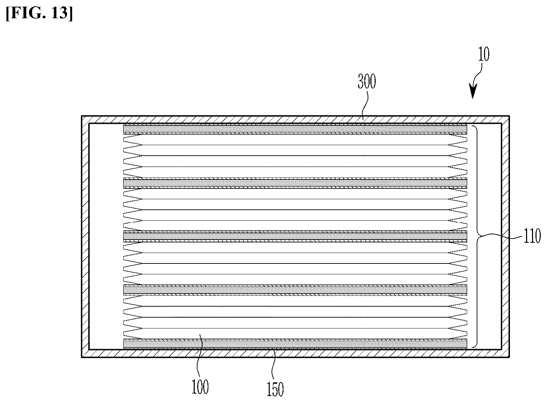

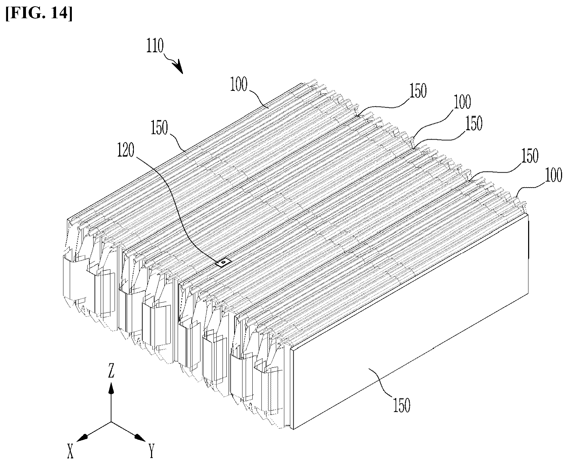

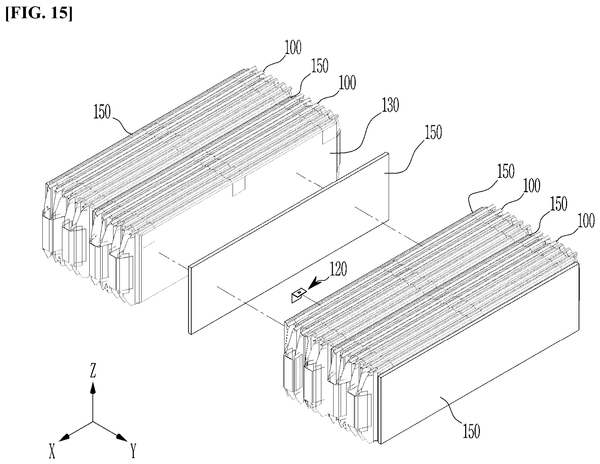

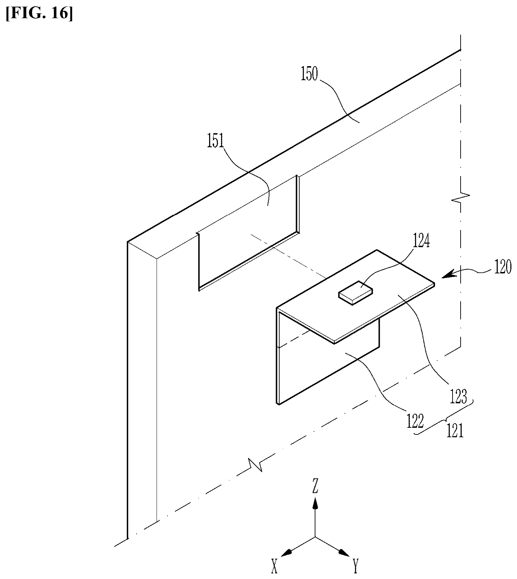

FIG. 13 is a cross-sectional view of a battery module according to another embodiment of the present disclosure. FIG. 14 is a perspective view showing a structure in which a temperature sensing unit according to another embodiment of the present disclosure is disposed in a battery cell stack. FIG. 15 is an exploded perspective view of FIG. 14. FIG. 16 is an exploded perspective view for explaining the compression pad and thermally conductive member shown in FIG. 14.

Referring to FIGS. 13 to 16, a battery module 10 according to another embodiment of the present disclosure may include a battery cell stack 110. The battery cell stack 110 may include a plurality of battery cells 100 stacked in one direction and a compression pad 150. The compression pad 150 may be disposed between two adjacent battery cells 100 among the plurality of battery cells 100. One or more compression pads 150 may be disposed, and when a plurality of compression pads 150 are provided, the plurality of compression pads 150 may be disposed spaced apart from each other. That is, each of the plurality of compression pads 150 may be disposed between the plurality of battery cells 100. Further, the compression pad 150 may be disposed on the outermost battery cell 100. For example, the compression pad 150 may be disposed between the outermost battery cell 100 and the side surface portion of the module frame 300.

The thermally conductive member 121 may be placed on the compression pad 150. More specifically, at least a part of the contact portion 122 of the thermally conductive member 121 may be disposed between the compression pad 150 and the battery cell 100 adjacent to the compression pad 150.

The compression pad 150 may include a housing groove 151 having a shape corresponding to the shape of the compression pad 150 so that the contact portion 122 of the thermally conductive member 121 is housed therein. The contact portion 122 of the thermally conductive member 121 may be in contact with the adjacent battery cell 100 while being housing in the housing groove 151. At this time, the contact portion 122 of the thermally conductive member 121 can be housed in the housing groove 151 so as to wholly flatten with the large area of the compression pad 150. That is, even if the contact portion 122 of the thermally conductive member 121 is housed in the housing groove 151, the thermally conductive member 121 may not protrude from the large area of the compression pad 150. Therefore, the thermally conductive member 121 and the compression pad 150 housed in the housing groove 151 may have a flat surface as a whole.

Therefore, even if the contact portion 122 is housed in the housing groove 151 of the compression pad 150, the battery cell 100 may not be pressed and/or deformed by the contact portion 122. Therefore, even if a swelling phenomenon occurs on the battery module 10, damage to the battery cell 100 due to the thermally conductive member 121 can be prevented.

Meanwhile, although the embodiments of FIGS. 13 to 16 illustrate the case where the temperature sensing unit 120 of FIG. 5 is applied, the present disclosure is not limited thereto. That is, the temperature sensing unit 120 including the expansion portion 125 of FIG. 7, the temperature sensing unit 120 including the extension portion 126 and the hooking portion 127 of FIG. 8, the temperature sensing unit 120 including the heat insulating member 130 of FIG. 9, the reinforcing member 140 for supporting the temperature sensing unit 120 of FIG. 10, etc. can be applied, and various modifications and changes are possible. In addition, the embodiments described with reference to FIGS. 5 to 16 can be modified and changed in various ways, such as by coupling them with each other.

Meanwhile, the embodiments described above with reference to FIGS. 5 to 16 have been described as having one temperature sensor 124 provided between adjacent battery cells 100 or between a battery cell 100 and a compression pad 150, however, depending on the design, a plurality of temperature sensors 124 may be provided in the battery cell stack 110. The plurality of temperature sensors 124 is preferably disposed at equal intervals, this is not necessarily the case. If there is a location where a temperature rise is concentrated within the battery cell stack 110, the temperature sensors 124 may be disposed at that position or near that position.

For example, two temperature sensors 124 may be provided in the battery cell stack 110. The thermally conductive member 121 is disposed between two battery cells 100 that is located closest to the center of the battery cell stack 110 among the plurality of battery cells 100 and between two battery cells 100 located on the outermost side among the plurality of battery cells 100, and the temperature sensor 124 can be respectively coupled on the thermally conductive member 121.

In addition, the thermally conductive member 121 is disposed between the compression pad 150 located closest to the center of the battery cell stack 110 and the battery cell 100 in contact with the compression pad 150, and between the outermost battery cell 100 among the plurality of battery cells 100 and the compression pad 150 abutting against the outermost battery cell 100, and the temperature sensor 124 can be respectively coupled on the thermally conductive member 121.

Since the temperature sensor 124 is disposed to be in contact with the central battery cell 100 and the outermost battery cell 100 of the battery cell stack 110, it is easy to measure the temperature deviation within the battery module 10.

The battery module 10 according to the above-mentioned embodiments may be included in a battery pack. The battery pack may have a structure in which one or more of the battery modules according to the present embodiment are gathered, and packed together with a BMS and a cooling device that control and manage battery's temperature, voltage, etc.

The battery pack according to the present embodiment may include a processor (not shown) that is integrated into the BMS or is separately provided outside the BMS and can remotely communicate with the BMS. The processor may include, for example, a micro controller unit (MCU). The processor can convert the measured temperature value of the battery cell 100 measured by the temperature sensor 124 of the battery module 10 into an actual temperature value based on the shape and properties of the thermally conductive member 121. For example, the processor can convert the measured temperature value of the battery cell 100 into the actual temperature value based on the length of the contact portion 122 of the thermally conductive member 121 and the thermal conductivity of the thermally conductive member 121.

A battery module and a battery pack comprising the same can be applied to various devices. Such a device can be applied to a vehicle means such as an electric bicycle, an electric vehicle, or a hybrid vehicle, and/or an energy storage system (ESS), but the present disclosure is not limited thereto, and is applicable to various devices that can use a battery module and a battery pack comprising the same, which is also falls under the scope of the present disclosure.

While preferred embodiments of the present disclosure have been described in detail, the technical scope of the present disclosure is not limited to the embodiments, and also includes various modifications and improvements made by one of ordinary skill in the art using the concepts defined in the claims attached therewith.

### [Description of Reference Numerals]

10: battery module
100: battery cell
110: battery cell stack
120: temperature sensing unit
121: thermally conductive member
122: contact portion
123: mounting portion
124: temperature sensor
125: expansion part
126: extension part
127: hooking portion
130: heat insulating member
131: sensor housing portion
140: reinforcing member
150: compression pad
151: housing groove
200: busbar frame
210: busbar
300: module frame
400: end plate

## Claims

1. A battery module comprising:
a battery cell stack in which a plurality of battery cells are stacked along one direction; and
a temperature sensing unit disposed in the battery cell stack,
wherein the temperature sensing unit comprises:
a thermally conductive member configured to be at least partially in contact with the battery cells; and
a temperature sensor coupled to the thermally conductive member to measure the temperature of the battery cells.

2. The battery module according to claim 1,
wherein the thermally conductive member comprises a contact portion that is in contact with a cell body of the battery cell and a mounting portion on which the temperature sensor is disposed.

3. The battery module according to claim 2,
wherein the mounting portion is folded and extended from one end of the contact portion and located outside the battery cell stack.

4. The battery module according to claim 2,
wherein the contact portion comprises a first portion that is in contact with the cell body and a second portion that extends from the first portion to protrude outside the battery cell.

5. The battery module according to claim 4,
wherein the thermally conductive member further comprises an expansion portion that is connected to the first portion, and is in contact with the cell body, and
the area of the expansion portion is larger than the area of the first portion.

6. The battery module according to claim 5,
wherein the area of the expansion portion is 0.1 times to 1 time the area of the cell body.

7. The battery module according to claim 4,
wherein the thermally conductive member further comprises:
an extension portion that extends from the first portion in a direction toward the lower portion of the battery cell; and
a hooking portion that is folded from a terminal end of the extension portion toward the one direction in which the plurality of battery cells are stacked.

8. The battery module according to claim 2,
wherein the contact portion is arranged to be parallel to the large area of the battery cell, and the mounting portion extends along the one direction so as to orthogonally cross with the contact portion.

9. The battery module according to claim 2,
wherein the contact portion comprises a pair of contact portions arranged to face each other, and
the mounting portion is disposed between the pair of contact portions to connect the respective contact portions.

10. The battery module according to claim 2,
wherein the contact portion is formed in the shape of thin films or wires.

11. The battery module according to claim 1,
further comprising a reinforcing member that supports at least a part of the temperature sensing unit.

12. The battery module according to claim 1,
wherein the thermally conductive member is disposed at least at one place between two battery cells that are located closest to the center of the battery cell stack among the plurality of battery cells, and between the two battery cells that are located at the outermost side among the plurality of battery cells.

13. The battery module according to claim 1,
further comprising a compression pad located at least at one place between two adjacent battery cells and the outside of the outermost battery cell among the plurality of battery cells,
wherein the thermally conductive member is disposed on the compression pad.

14. The battery module according to claim 13,
wherein the compression pad comprises a housing groove in which at least a part of the thermally conductive member is housed.

15. The battery module according to claim 14,
wherein the thermally conductive member comprises a contact portion that is in contact with a cell body of the battery cells and a mounting portion on which the temperature sensor is disposed,
at least a part of the contact portion is housed in the housing groove, and
the mounting portion is folded and extended from one end of the contact portion and located outside the battery cell stack.

16. The battery module according to claim 14,
wherein the at least a part of the thermally conductive member is housed in the housing groove so as to wholly flatten with a large area of the compression pad.

17. The battery module according to claim 1,
wherein the thermally conductive member further comprises a heat insulating member that covers a portion of the battery cell that is not in contact with a cell body of the battery cell.

18. The battery module according to claim 17,
wherein the heat insulating member comprises a sensor housing portion in which a portion of the thermally conductive member is exposed to the outside, and
the temperature sensor is disposed in the sensor housing portion.

19. A battery pack comprising the battery module according to claim 1.

20. An energy storage system comprising the battery pack according to claim 19.
